# EUROPÄISCHE PATENTSCHRIFT

(11) **EP 2 676 046 B1**
(45) Veröffentlichungstag und Bekanntmachung des Hinweises auf die Patenterteilung: **18.05.2016**
(21) Anmeldenummer: 12703454.4
(22) Anmeldetag: 06.02.2012
(51) Int. Cl.: F16F 7/12

(54) **STOßFÄNGER FÜR KRAFTFAHRZEUGE MIT INTEGRIERTERN FUßGÄNGERSCHUTZSYSTEM**
BUMPER FOR VEHICLES WITH INTEGRATED PEDESTRIAN PROTECTION FUNCTION
PARE-CHOCS POUR VÉHICULES À FONCTION INTÉGRÉE DE PROTECTION DES PIÉTONS

(30) Priorität: 16.02.2011 DE 102011004197
(43) Veröffentlichungstag der Anmeldung: 25.12.2013
(73) Patentinhaber: Constellium Singen GmbH, 78224 Singen (DE)
(72) Erfinder: KUTSCHER, Matthias, 78467 Konstanz (DE); REBSTOCK, Thomas, 78247 Hilzingen (DE); REBUFFET, Olivier, 38000 Grenoble (FR); RIEDL, Wilhelm, 85276 Pfaffenhofen (DE); FICHTINGER, Gerhard, 85630 Grasbrunn (DE)
(74) Vertreter: Constellium - Propriété Industrielle
(86) Internationale Anmeldenummer: PCT/EP2012/000528
(87) Internationale Veröffentlichungsnummer: WO 2012/110208

(56) Entgegenhaltungen:
- DE-A1- 2 440 708
- DE-A1- 4 307 837
- DE-A1-102005 020 730
- DE-A1-102008 047 203
- DE-T2- 60 206 255

## Beschreibung

Die vorliegende Erfindung betrifft einen Stoßfänger für Kraftfahrzeuge mit einem rinnenförmigen Querträger und einem diesem vorgelagerten rinnenförmigen Frontelement, welche zusammen ein Fußgängerschutzsystem bilden.

Solche Fußgängerschutzsysteme sind im Stand der Technik bekannt. Sie dienen dazu, die Folgen eines Zusammenstoßes zwischen einem Fußgänger und einem Kraftfahrzeug für den Fußgänger zu lindern, indem die Verzögerungsspitzenwerte beim Aufprall des Kraftfahrzeugs auf das Bein eines Fußgängers reduziert werden. Dies wird dadurch erreicht, dass das dem Querträger des Stoßfängers vorgelagerte Frontelement mit geringeren Kräften deformierbar ist als der sich in Fahrtrichtung gesehen dahinter befindliche Querträger. Durch die Verformung des Frontelements über seine gesamte Tiefe von seiner Stirnseite aus bis nahe der Stirnseite des Querträgers wird dem Verzögerungsimpuls die Spitze genommen, da die Krafteinwirkung zeitlich gestreckt wird.

Aus der DE 10 2007 039 211 A1 ist ein Stoßfänger für Kraftfahrzeuge bekannt. Dieser Stoßfänger weist einen Querträger mit rechteckigem Querschnitt auf mit einer Wandstärke von beispielsweise 3 bis 6 mm. Dem vorgebaut ist ein Frontelement, ebenfalls mit rechteckigem Querschnitt, jedoch mit einer bedeutend kleineren Wandstärke von beispielsweise 0,2 bis 0,8 mm Das Frontelement hat eine geringere Bauhöhe als der Querträger und seine Oberseite und Unterseite erstrecken sich vom Querträger ausgehend horizontal nach vorne. Diese Ausrichtung der Ober- und Unterseiten des Frontelements in Fahrtrichtung erschwert zu Beginn einer Kollision mit einem Fußgänger die Verformung des Frontelements. Diesem Umstand wird gemäß dieser Druckschrift Rechnung getragen, indem deformationsfördernde Randprofile, insbesondere in Form von eingezogenen oder eingewölbten Profilbereichen vorgesehen sind.
Aus der DE 60 206 255 T2 ist ein Stoßfänger für Kraftfahrzeuge nach dem Oberbegriff des Anspruchs 1 bekannt.

Nachteilig ist bei einer solchen Ausführung eines Fußgängerschutzsystems, dass durch die geringe Bauhöhe des Frontelements die Auftrefffläche des Fußgängerschutzsystems auf das Bein eines Fußgängers relativ klein ist und sich während der Deformation auch nicht vergrößert. Dadurch werden die Aufschlagkräfte lokal auf einen kleinen Bereich des Körpers des Fußgängers konzentriert, was die Schwere der zu erwartenden Verletzungen nicht abmildern kann.

Außerdem gestaltet sich das Extrusionsverfahren durch die geforderte sehr kleine Wandstärke des Frontelements schwierig.

Aufgabe der vorliegenden Erfindung ist es, einen Stoßfänger für Kraftfahrzeuge mit integriertem Fußgängerschutzsystem vorzustellen, welches eine verbesserte Verformbarkeit beim Zusammenprall mit einem Fußgänger aufweist und das mit geringerem Aufwand herstellbar ist, wodurch seine Kosten reduziert sind.

Diese Aufgabe wird mit den Merkmalen des Patentanspruchs 1 gelöst. In den Unteransprüchen sind Merkmale bevorzugter Ausführungsformen der Erfindung gekennzeichnet.

Die vorliegende Erfindung hat somit zum Gegenstand einen Stoßfänger für Kraftfahrzeuge mit einem rinnenförmigen Querträger und einem diesem vorgelagerten rinnenförmigen Frontelement, welche zusammen ein Fußgängerschutzsystem bilden. Der erfindungsgemäße Stoßfänger ist dadurch gekennzeichnet, dass im montierten Zustand das Frontelement eine größere Bauhöhe als der Querträger hat und seine oberen und unteren Wandbereiche sich in ihrem hinteren, dem Querträger zugewandten Teil, ausgehend von der Horizontalen, die der Fahrtrichtung entspricht, auf den Querträger zuneigen.

Vorzugsweise neigt sich jeder obere oder untere Wandbereich in seinem hinteren, dem Querträger zugewandten Teil in einer Berührungsstelle auf den Querträger zu, wo der von diesem (Querträger) und der Horizontalen gebildete Winkel zwischen 60° und 180°, vorzugsweise zwischen 80° und 120°, und besonders bevorzugt annähernd 90° ist.

Mit anderen Worten, trifft jedes Ende der hinteren, oberen und unteren Wandbereiche des Frontelements in einer Berührungsstelle auf den Querträger, wo es mit der aus der Außenseite des Querträgers gehenden Vertikalen einen spitzen Winkel bildet. Der spitze Winkel kann positiv oder negativ sein, d.h. die oberen und unteren Wandbereiche des Frontelements können in der Nähe der Bindungsstelle mit dem Querträger nach vorne oder nach hinten geneigt sein. Wenn der Wandbereich nach vorne geneigt ist, muß der Winkel kleiner als 30° sein, um dem Frontelement eine bessere Biegsamkeit zu geben. Vorteilhafterweise ist der absolute Wert dieses Winkels kleiner als 30°, besonders bevorzugt kleiner als 10°. In speziell bevorzugten Ausführungsformen der Erfindung beträgt dieser Winkel annähernd null Grad.

Vorzugsweise weist der Querträger obere und untere Vorderkanten auf, und das Frontelement trifft mit seinen oberen und unteren hinteren Wandbereichen an diesen oberen und unteren Vorderkanten auf den Querträger.

In einer bevorzugten Ausführungsform der Erfindung weist der Querträger im Querschnitt ein etwa rechtwinkliges Profil auf, mit einer mit den Trägerelementen verbundenen, etwa vertikalen Rückwand, einer ebenfalls etwa vertikal verlaufenden Vorderwand und etwa horizontal verlaufenden, übereinander liegenden Querwänden. Der hintere dem Querträger zugewandte Teil des oberen (bzw. unteren) Wandbereiches des Frontelements trifft auf die obere (bzw. untere) Querwand des Querträgers in einem gegenüber der aus der Außenseite des Querträgers gehenden Vertikalen (Na, bzw. Nb) spitzen Winkel.

Vorzugsweise neigen sich die dem Querträger zugewandten Teile ausgehend von der Horizontalen mit gegenüber der aus der Außenseite des Querträgers gehenden Vertikale kontinuierlich kleiner werdendem Winkel auf eine Querwand des Querträgers zu. Mit anderen Worten verlaufen die hinteren dem Querträger zugewandte Teile des oberen (bzw. unteren) Wandbereiches des Frontelements von einem äußersten oberen Ende, bzw. äußersten unteren Ende zu einer Bindungsstelle, wo die Tangente an jedem Punkt und die aus der Querwand des Querträgers ausgehende Vertikale einen Winkel bilden, der kontinuierlich abnimmt.

Vorzugsweise hat der Querträger eine größere Wandstärke als das Frontelement. Darüber hinaus kann das Frontelement einen Querschnitt aufweisen, wo die Wandstärke positionsabhängig ist. So können wir dicke, etwa zur Fahrtrichtung senkrechte Wandbereiche entwerfen, die mit dünneren, leichter verformbaren Wandbereichen verbunden sind. So kann der vordere Wandbereich des Frontelements dicker sein als der obere Wandbereich und der untere Wandbereich, was im Falle eines stranggepressten Mehrkammer- Hohlprofils vorteilhaft ist, weil dieses Hohlprofil damit leichter herzustellen ist.

Gemäß einer bevorzugten Ausführungsform der Erfindung sind der Querträger und das Frontelement einstückig mit einem Extrusionsverfahren aus einer Aluminiumlegierung hergestellt. Der Querträger und das Frontelement bilden zum Beispiel den hinteren Teil und das vordere Teil eines stranggepressten Hohlprofils.

Im Allgemeinen weist der Stossfänger eine gekrümmte Form auf. Das Hohlprofil muss deshalb oft gebogen werden. Da das Frontelement dünner ist als der Querträger, könnte es zu stark verformt werden oder sogar kollabieren. Um diese Verformung zu vermindern, wird vorzugsweise ein Profil verwendet, welches eine diskontinuierliche "Saugseite" (d.h. das vordere Teil des Frontelements, das während der Biegung ausgedehnt wird) aufweist. Es wird daher empfohlen, durch Fräsen oder Stanzen auf diesem vorderen Teil des Frontelements Kerben oder Schlitze herzustellen, zumindest im mittleren Bereich des Stoßfängers. Der mittlere Bereich des Stossfängers befindet sich zwischen dessen Klammern, die in der Verlängerung der Längsträger des Fahrzeugs angeordnet sind. Auf diese Weise bleibt der Querschnitt des mit dem Querträger und dem Frontelement gebildeten Fußgängerschutzsystems im Wesentlichen konstant, zumindest in diesem mittleren Bereich des Stoßfängers. Vorzugsweise verlaufen diese Kerben oder Schlitze senkrecht im Frontelement.

Durch das Vorsehen dieser Schlitze wird auch erreicht, dass bei der Kollision mit einem Fußgängerbein nur die Bereiche des Frontelements deformiert werden, gegen die das Bein trifft. Dadurch wird das Frontelement im Auftreffbereich leichter deformierbar und es werden Verzögerungsspitzen abgeschwächt.

Die Schlitze können verschiedene Formen haben, wobei einige die Biegefestigkeit des Frontelements fördern, andere bei der Kollision die Verformbarkeit des Frontelements verbessern.

Die Schlitze können sich von dem oberen, hinteren Wandbereich bis zum unteren, hinteren Wandbereich des Frontelements erstrecken. Vorteilhafterweise enden die Schlitze mit einem Abstand von mehreren Millimetern (z.B. 5 mm) vor dem Auftreffen der oberen und unteren hinteren Wandbereiche des Frontelements auf dem Querträger.

Vorteilhafterweise haben die Schlitze eine Breite der Größenordnung von einem bis zu mehreren Millimetern.

Im folgenden Beispiel haben die Schlitze gleichen Abstand und sind über die gesamte Länge des Frontelements verteilt angeordnet. Bei anderen Ausführungsformen der Erfindung sind die Kerben oder Schlitze mit einem Stichel gestanzt, dessen Querschnitt so geformt ist, dass die sich ergebenen Durchbrüche eine variable Breite aufweisen. Vorteilhafterweise münden die Enden der Schlitze in runde Löcher, deren Durchmesser vorzugsweise größer als die Breite dieser Schlitze ist.

Vorteilhafterweise weist das Frontelement in seinem frontalen Wandbereich eine nach hinten eingezogene Einbuchtung auf, die sich über seine gesamte Länge erstreckt.

Gemäß einer bevorzugten Ausführungsform der vorliegenden Erfindung weist das Frontelement auf der Innenseite seiner Wandung ein in Richtung der Längsachse des Frontelements geriffeltes Profil auf.

Gemäß einer bevorzugten Ausführungsform weist das Frontelement in den Tälern der Riffelung eine Wandstärke von etwa 1 mm auf und auf den Rücken der Riffelung eine Wandstärke von etwa 1,4 mm.

Gemäß einer bevorzugten Ausführungsform der vorliegenden Erfindung ist das Querschnittsprofil des Frontelements bezüglich seiner horizontalen Mittelachse symmetrisch.

Vorteilhafterweise können an den Innenwandungen des Frontelements Verformungs- und/oder Beschleunigungssensoren und/oder Abstandssensoren angebracht werden.

Vorteilhafterweise weist das Frontelement im Querschnitt an jeder Stelle einen größtmöglichen Krümmungsradius auf.

Im Folgenden wird die Erfindung anhand der Beschreibung einer bevorzugten Ausführungsform mit Bezug auf die Zeichnung näher erläutert. Darin zeigen:
Figur 1 eine perspektivische Ansicht eines Ausführungsbeispiels des erfindungsgemäßen Stoßfängers mit Fußgängerschutzsystem; und
Figur 2 einen Querschnitt durch den in Figur 1 gezeigten Stoßfänger.

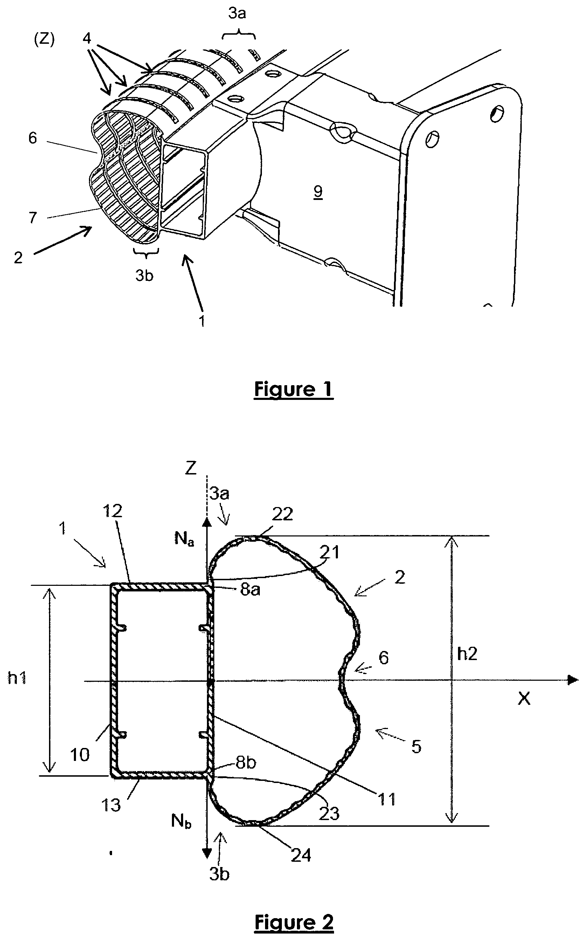

Figur 1 zeigt perspektivisch in Fahrtrichtung gesehen schräg von hinten ein Ausführungsbeispiel eines erfindungsgemäßen Stoßfängers.

Dieser weist einen Querträger 1 mit rechteckigem Querschnitt auf, der mit einem Trägerelement 9 verschraubt ist. Der Querträger 1 weist eine vertikale mit einem Trägerelement 9 verbundene Rückwand 10, eine vertikale Vorderwand 11 und zwei horizontal verlaufende, übereinander liegende und mit der Bäuhöhe h1 beabstandete Querwände 12 und 13 auf. Das Trägerelement 9 ist (nicht gezeigt) wiederum mit einem Längsträger oder dergleichen des Chassis des Kraftfahrzeugs verbunden. Der Querträger ist vorzugsweise aus einer Aluminiumlegierung hergestellt und weist eine Wandstärke von vorzugsweise 2 mm oder mehr auf.

Dem Querträger 1 ist ein Frontelement 2 in Fahrtrichtung gesehen vorgelagert. Das Frontelement 2 ist bei der hier gezeigten Ausführungsform einstückig mit dem Querträger 1 ausgeführt. Es wird zusammen mit dem Querträger 1 in einem Zweikammer-Extrusionsverfahren hergestellt.

Wie man deutlich in Figur 2 erkennt, hat das Frontelement 2 eine Bauhöhe h2, die größer ist als die Bauhöhe h1 des Querträgers 1. Das heißt, das Frontelement 2 steht in montiertem Zustand sowohl oben als auch unten gegenüber dem Querträger 1 über. Die Bauhöhe h2 ist in dieser bevorzugten Ausführungsform die Distanz zwischen dem äußersten oberen Ende 22 und dem äußersten unteren Ende 24.

Der obere, hintere Wandbereich 3a des Frontelements 2, der sich vom äußersten oberen Ende 22 auf die Bindungsstelle 21 erstreckt, sowie der untere, hintere Wandbereich 3b des Frontelements 2, der sich vom äußersten unteren Ende 24 auf die Bindungsstelle 23 erstreckt, neigen sich von der Horizontalen mit großem Krümmungsradius auf die obere bzw. untere Vorderkante 8a bzw. 8b zu. Dort treffen sie an den Vorderkanten 8a, 8b auf die Oberseite bzw. auf die Unterseite des Querträgers 1 auf. Das heißt, zu den ausgehenden Normalen Na bzw. Nb, die hier senkrecht sind, nehmen sie an der Berührungsstelle einen Winkel von null Grad ein. Dieser Auftreffwinkel kann auch etwas größer als null Grad sein.

Diese Ausgestaltung des Frontelements 2 hat den Effekt, dass bei einer Kollision mit einem Fußgänger sich das Frontelement 2 an den Ober- und Unterkanten 8a, 8b des Querträgers 1 leichter verformen lässt als wenn die Ober- und Unterseite des Frontelements 2 sich horizontal in Fahrtrichtung erstreckte.

Der maximale Verformungsweg des Frontelements 2 ist bei einer Kollision optimal, da eine Verformung stattfinden kann, bis die Stirnseite 5 des Frontelements 2 auf der Stirnseite der Vorderwand 11 des Querträgers 1 anliegt. Der obere, hintere Wandbereich 3a und der untere, hintere Wandbereich 3b der Wandung des Frontelements 2 werden dabei über die Vorderkanten 8a, 8b hinaus entgegen der Fahrtrichtung nach hinten verformt und verschoben.

Auf diese Weise wird die Tiefe des Frontelements 2 in X-Richtung für den maximal zur Verfügung stehenden Verformungsweg optimal ausgenutzt. Wie bereits oben erwähnt, ist ein großer Verformungsweg wichtig für die zeitliche Streckung der Krafteinwirkung. Somit können erfindungsgemäß entweder die auftretenden Verzögerungsspitzen weiter abgemildert werden, oder es kann die Bautiefe des Frontelements 2 verringert werden, was zu einer kompakteren Bauform des Stoßfängers mit Fußgängerschutzsystem führt.

Stirnseitig 5 ist bei der gezeigten Ausführungsform des Frontelements 2 eine Einbuchtung 6 in der Wandung des Frontelements 2 vorgesehen, die sich in Form einer Nut über die gesamte Länge des Frontelements 2 erstreckt. Die Einbuchtung 6 ist im Querschnitt gesehen mit großen Krümmungsradien ausgestattet, um kein unnötiges Verletzungspotential zu kreieren. Durch die Einbuchtung 6 wird die Stirnseite des Frontelements 2 etwas versteift, um bei einer Kollision die Verformungen des Frontelements 2 stärker auf die oberen und unteren Bereiche der Wandung des Frontelements 2 zu konzentrieren.

Wie man in Figur 1 erkennt, sind im Frontelement 2 senkrecht verlaufende Schlitze jeweils gleich beabstandet entlang der gesamten Längenausdehnung des Frontelements 2 vorgesehen. Die senkrechten Schlitze 4, die eine Breite der Größenordnung von einem Millimeter haben können, beginnen im oberen, hinteren Bereich 3a des Frontelements 2 und enden im unteren, hinteren Bereich 3b, ohne bis zu den Vorderkanten 8a, 8b des Querträgers 1 zu gelangen. Die dadurch gebildeten Stege zwischen den Schlitzen 4 können eine Breite der Größenordnung von einem oder mehreren Zentimetern aufweisen. Durch das Vorsehen der Schlitze 4 wird erreicht, dass bei der Kollision mit einem Fußgängerbein nur die Bereiche des Frontelements 2 deformiert werden, gegen die das Bein trifft. Dadurch wird das Frontelement 2 im Auftreffbereich leichter deformierbar und es werden Verzögerungsspitzen abgeschwächt.

Zusätzlich kann die Deformierbarkeit der Wandungen des Frontelements 2 positiv dadurch beeinflusst werden, indem die Innenseite der Wandung geriffelt wird. Dies geschieht durch eine entsprechende Ausgestaltung des Extrusionswerkzeugs. Bevorzugt wird, dass die Riffelung im Querschnitt eine Wellenform aufweist. Dabei beträgt die Wandstärke des Frontelements 2 in den "Riffelungstälern" bevorzugter Weise etwa 1 mm, wohingegen sie im Bereich der "Riffelungsrücken" vorzugsweise 1,4 mm beträgt. Durch die Riffelung 7 wird ein Umknicken der Streifen zwischen den Schlitzen 4 im Auftreffbereich des Fußgängerkörpers erleichtert, was sonst nur bei bedeutend dünneren Wandstärken des Frontelements 2 möglich wäre. Bedeutend dünnere Wandstärken sind jedoch schwieriger im Extrusionsverfahren zu realisieren, wodurch somit die Herstellung erleichtert wird.

Schließlich kann der durch das Frontelement 2 gebildete Hohlraum noch mit Sensoren an der Innenwand der Stirnseite des Frontelements 2 bestückt werden, wie beispielsweise Verformungs- und/oder Beschleunigungssensoren und/oder Abstandssensoren.

Die vorliegende Erfindung stellt somit einen Stoßfänger mit integriertem Fußgängerschutzsystem vor, der ein verbessertes Verformungsverhalten aufweist, der vereinfacht herzustellen ist und somit eine kostengünstige Lösung darstellt.

Die oben stehende Beschreibung eines Ausführungsbeispiels ist nicht einschränkend zu verstehen. Die Erfindung schließt vielmehr alle denkbaren Varianten ein, die unter den Wortlaut der beigefügten Patentansprüche fallen.

## Patentansprüche

1. Stoßfänger für Kraftfahrzeuge mit einem rinnenförmigen Querträger (1) und einem diesem vorgelagerten rinnenförmigen Frontelement (2), welche zusammen ein Fußgängerschutzsystem bilden,
im montierten Zustand das Frontelement (2) eine größere Bauhöhe (h2) als der Querträger (1) hat und seine oberen und unteren Wandbereiche sich in ihrem hinteren, dem Querträger zugewandten Teil (3a, 3b), ausgehend von der Horizontalen, auf den Querträger (1) zuneigen
**dadurch gekennzeichnet, dass**
jedes Ende der hinteren, oberen und unteren Wandbereiche des Frontelements auf den Querträger in einer Berührungsstelle trifft, wo dieses mit der aus der Außenseite des Querträgers gehenden Vertikalen einen spitzen Winkel bildet, dessen absoluter Wert vorzugsweise kleiner als 30°, besonders bevorzugt kleiner als 10° und speziell bevorzugt annähernd null Grad ist.
Und
sich die dem Querträger zugewandten Teile, ausgehend von der Horizontalen mit gegenüber der aus der Außenseite des Querträgers gehenden Vertikalen (Z) kontinuierlich kleiner werdendem Winkel auf eine Querwand (12 oder 13) des Querträgers (1) zuneigen.

2. Stoßfänger nach Anspruch 1,
**dadurch gekennzeichnet, dass**
jeder obere oder untere Wandbereich sich in seinem hinteren, dem Querträger zugewandten Teil auf den Querträger in einer Berührungsstelle zuneigt, wo der von ihm und der nach vorne orientierten Horizontalen gebildete Winkel zwischen 60° und 180°, vorzugsweise, zwischen 80° und 120°, und besonders bevorzugt annähernd 90° ist.

3. Stoßfänger nach einem der vorstehenden Ansprüche, wobei der Querträger (1) obere und
untere Vorderkanten (8a, 8b) aufweist,
**dadurch gekennzeichnet, dass**
das Frontelement (2) mit seinen oberen und unteren, hinteren Wandbereichen (3a, 3b) an den oberen und unteren Vorderkanten (8a, 8b) des Querträgers (1) auf diesen trifft.

4. Stoßfänger nach einem der vorstehenden Ansprüche, wobei
der Querträger (1) im Querschnitt ein etwa rechtwinkliges Profil, mit einer mit den Trägerelementen (9) verbundenen, etwa vertikalen Rückwand (10), einer ebenfalls etwa vertikal verlaufenden Vorderwand (11) und etwa horizontal verlaufenden, übereinander liegenden Querwänden (12 und 13) aufweist,
**dadurch gekennzeichnet, dass**
die hinteren dem Querträger zugewandten Teile der oberen und unteren Wandbereiche (3a, 3b) unter einem gegenüber der von der Außenseite des Querträgers ausgehenden Vertikalen (Z) spitzen Winkel auf eine Querwand (12 oder 13) des Querträgers (1) treffen.

5. Stoßfänger nach einem der vorstehenden Ansprüche,
**dadurch gekennzeichnet, dass**
der Querträger (1) eine größere Wandstärke aufweist als das Frontelement (2).

6. Stoßfänger nach einem der vorstehenden Ansprüche,
**dadurch gekennzeichnet, dass**
das Frontelement einen Querschnitt aufweist, wo die Wandstärke so positionsabhängig ist, dass dicke, etwa zur Fahrtrichtung senkrechte Wandbereiche mit dünneren, leichter verformbaren Wandbereichen verbunden sind.

7. Stoßfänger nach einem der vorstehenden Ansprüche,
**dadurch gekennzeichnet, dass**
der Querträger (1) und das Frontelement (2) einstückig mit einem Extrusionsverfahren aus einer Aluminiumlegierung hergestellt sind.

8. Stoßfänger nach dem Anspruch 7,
**dadurch gekennzeichnet, dass**
der Querträger (1) und das Frontelement (2) das hintere Teil und das vordere Teil eines stranggepressten Hohlprofils bilden.

9. Stoßfänger nach Anspruch 7,
**dadurch gekennzeichnet, dass**
das Hohlprofil gebogen und gefräst oder gestanzt wird, so dass der Querschnitt des mit dem Querträger und dem Frontelements gebildeten Fußgängerschtttzsystems, zumindest im mittleren Bereich des Stoßfängers, im Wesentlichen konstant bleibt.

10. Stoßfänger nach einem der vorstehenden Ansprüche,
**dadurch gekennzeichnet, dass**
das Frontelement (2) senkrecht verlaufende Schlitze (4) aufweist.

11. Stoßfänger nach Anspruch 9,
**dadurch gekennzeichnet, dass**
die Schlitze (4) sich vom oberen, hinteren Wandbereich (3a) bis zum unteren, hinteren Wandbereich (3b) des Frontelements erstrecken.

12. Stoßfänger nach Anspruch 11,
**dadurch gekennzeichnet, dass**
die Schlitze (4) vor dem Auftreffen der oberen und unteren, hinteren Wandbereiche (3a, 3b) des Frontelements (2) auf den Querträger (1) mit einem Abstand von mehreren Millimeter enden.

13. Stoßfänger nach einem der Ansprüche 10 bis 12,
**dadurch gekennzeichnet, dass**
die Schlitze (4) eine Breite der Größenordnung von 1 bis mehreren Millimetern haben.

14. Stoßfänger nach einem der Ansprüche 10 bis 13,
**dadurch gekennzeichnet, dass**
die Schlitze (4) einen gleichen Abstand haben und über die gesamte Länge des Frontelements (2) verteilt angeordnet sind.

15. Stoßfänger nach einem der vorstehenden Ansprüche,
**dadurch gekennzeichnet, dass**
das Frontelement (2) in seinem frontalen Wandbereich (5) eine nach hinten eingezogene Einbuchtung (6) aufweist, die sich über seine gesamte Länge erstreckt.

16. Stoßfänger nach einem der vorstehenden Ansprüche,
**dadurch gekennzeichnet, dass**
das Frontelement (2) auf der Innenseite seiner Wandungen ein in Richtung der Längsachse des Frontelements geriffeltes Profil (7) aufweist.

17. Stoßfänger nach Anspruch 16,
**dadurch gekennzeichnet, dass**
das Frontelement (2) in den Tälern der Riffelung (7) eine Wandstärke von etwa 1 mm aufweist und auf den Rücken der Riffelung eine Wandstärke von etwa 1,4 mm.

18. Stoßfänger nach einem der vorstehenden Ansprüche,
**dadurch gekennzeichnet, dass**
an den Innenwandungen des Frontelements (2) Verformungs- und/oder Beschleunigungssensoren und/oder Abstandssensoren angebracht sind.

19. Stoßfänger nach einem der vorstehenden Ansprüche,
**dadurch gekennzeichnet, dass**
das Frontelement (2) im Querschnitt an jeder Stelle einen größtmöglichen Krümmungsradius aufweist.

## Claims

1. A bumper for motor vehicles with a channel-shaped cross member (1) and a frontal channel-shaped front element (2), which together form a pedestrian protection system, where in the assembled state, the front element (2) has a greater overall height (h2) than the cross member (1) and its upper and lower wall areas incline from the horizontal towards the cross member (1) in its rear portion (3a, 3b) that faces the cross member, **characterised in that**
each end of the rear, upper and lower wall areas of the front element abut on the cross member at a contact position, where it forms an acute angle with the vertical extending from the outer side of the cross member, whose absolute value is preferably smaller than 30°, more preferably less than 10°, and especially preferably close to zero degrees.
and
where the parts facing the cross member incline at a continuously decreasing angle to a transverse wall (12 or 13) of the cross member (1), starting from the horizontal with respect to the cross member's vertical axis (Z) extending from the outer side of the cross member.

2. A bumper according to claim 1, **characterised in that** each upper or lower wall area in its rear part facing the cross member inclines at a contact point with the cross member, whereby the angle formed by it and the horizontal oriented towards the front side is between 60° and 180°, preferably between 80° and 120°, and particularly preferably approximating 90°.

3. A bumper according to one of the preceding claims, whereby the cross member (1) has upper and lower front edges (8a, 8b), **characterised in that** the front element (2) with its upper and lower rear wall areas (3a, 3b) make contact with the upper and lower front edges (8a, 8b) of the cross member (1).

4. A bumper according to one of the preceding claims, whereby the cross section of the cross member (1) has an approximately rectangular profile, with an approximately vertical rear wall (10) connected to support elements (9), a likewise approximately vertically extending front wall (11) and approximately horizontally extending, superposed transverse walls (12 and 13), **characterised in that** the rear parts of the upper and lower wall portions (3a, 3b) facing the cross member contact a transverse wall (12 or 13) of the cross member (1) at an acute angle to a vertical axis (Z) extending from the outer side of the cross member.

5. A bumper according to one of the preceding claims, **characterised in that** the cross member (1) has a greater wall thickness than the front element (2).

6. A bumper according to one of the preceding claims, **characterised in that** the front element has a cross section where the wall thickness is dependent on position, whereby thick wall areas vertical to the direction of travel are connected to thinner, lighter deformable wall areas.

7. A bumper according to one of the preceding claims, **characterised in that** the cross member (1) and the front element (2) are manufactured in one piece from an aluminium alloy by an extrusion process.

8. A bumper according to claim 7, **characterised in that** the cross member (1) and the front element (2) form the back part and the front part of an extruded hollow profile.

9. A bumper according to claim 7, **characterised in that** the hollow profile is bent and milled or punched so that the cross section of the pedestrian protection system formed by the cross member and the front element remains substantially constant, at least in the central region of the bumper.

10. A bumper according to one of the preceding claims, **characterised in that**, the front element (2) has vertically extending slits (4).

11. A bumper according to claim (9), **characterised in that** the slits (4) extend from the upper rear wall area (3a) to the lower rear wall area (3b) of the front element.

12. A bumper according to claim 11, **characterised in that** the slits (4) before reaching the upper and lower rear wall portions (3a, 3b) of the front member (2) terminate at the cross member (1) with a distance of several millimetres.

13. A bumper according to claims 10 to 12, **characterised in that** the slits (4) have a width in the order of 1 to several millimetres.

14. A bumper according to claims 10 to 13, **characterised in that** the slits (4) have an equal distance and are arranged over the entire length of the front element (2).

15. A bumper according to one of the preceding claims, **characterised in that** in its frontal wall area (5), the front element (2) has a rearwardly retracted indentation (6), which extends over its entire length.

16. A bumper according to one of the preceding claims, **characterised in that** on the inner side of its walls, the front element (2) has a corrugated profile (7) in the direction of the longitudinal axis of the front element.

17. A bumper according to claim 16, **characterised in that** the front element (2) has a wall thickness of about 1 mm in the troughs of the corrugations (7) and a wall thickness of about 1.4 mm in the ridges of the corrugations.

18. A bumper according to one of the preceding claims, **characterised in that** deformation and/or acceleration sensors and/or distance sensors are attached to the inner walls of the front element (2).

19. A bumper according to one of the preceding claims, **characterised in that** the front element (2) has a greatest possible radius of curvature in cross section at any point.

## Revendications

1. Pare-chocs pour véhicules automobiles comprenant une traverse (1) en forme de goulotte et un élément frontal (2) en forme de goulotte monté devant cette dernière, lesquels forment ensemble un système de protection des piétons,
à l'état monté, l'élément frontal (2) ayant un plus grand encombrement en hauteur (h2) que la traverse (1) et ses zones de paroi supérieure et inférieure, dans sa partie arrière (3a, 3b) tournée vers la traverse, étant inclinées vers la traverse (1) depuis l'horizontale,
**caractérisé en ce que**
chaque extrémité des zones de paroi arrière supérieure et inférieure de l'élément frontal touche la traverse en un point de contact où elle forme avec la verticale partant du côté extérieur de la traverse un angle aigu dont la valeur absolue est de préférence inférieure à 30°, mieux encore inférieure à 10° et de façon particulièrement préférée proche de zéro degré,
et
les parties tournées vers la traverse sont inclinées depuis l'horizontale vers une paroi transversale (12 ou 13) de la traverse (1), selon un angle diminuant en continu par rapport à la verticale (Z) partant du côté extérieur de la traverse.

2. Pare-chocs selon la revendication 1,
**caractérisé en ce que**
chaque zone de paroi supérieure ou inférieure, dans sa partie arrière tournée vers la traverse, est inclinée vers la traverse en un point de contact où l'angle formé par elle et l'horizontale orientée vers l'avant est compris entre 60° et 180°, de préférence entre 80° et 120°, et de manière particulièrement préférée proche de 90°.

3. Pare-chocs selon l'une des revendications précédentes, la traverse (1) ayant des bords supérieur et inférieur (8a, 8b),
**caractérisé en ce que**
l'élément frontal (2), avec ses zones arrière supérieure et inférieure (3a, 3b), touche la traverse (1) aux bords supérieur et inférieur (8a, 8b) de celle-ci.

4. Pare-chocs selon l'une des revendications précédentes,
la traverse (1) présentant, en section transversale, un profil sensiblement rectangulaire, avec une paroi arrière (10) sensiblement verticale reliée aux éléments de support (9), une paroi avant (11) elle aussi sensiblement verticale et des parois transversales (12 et 13) sensiblement verticales placées l'une au-dessus de l'autre,
**caractérisé en ce que**
les parties arrière, tournées vers la traverse, des zones de paroi supérieure et inférieure (3a, 3b) touchent une paroi transversale (12 ou 13) de la traverse (1) en formant un angle aigu avec la verticale (Z) partant du côté extérieur de la traverse.

5. Pare-chocs selon l'une des revendications précédentes,
**caractérisé en ce que**
la traverse (1) présente une épaisseur de paroi supérieure à celle de l'élément frontal (2).

6. Pare-chocs selon l'une des revendications précédentes,
**caractérisé en ce que**
l'élément frontal (2) présente une section transversale où l'épaisseur de paroi est fonction de la position, de telle sorte que des zones de paroi épaisses sensiblement perpendiculaires à la direction de déplacement sont reliées à des zones de paroi plus minces et plus facilement déformables.

7. Pare-chocs selon l'une des revendications précédentes,
**caractérisé en ce que**
la traverse (1) et l'élément frontal (2) sont réalisés en une seule pièce avec un procédé d'extrusion, à partir d'un alliage d'aluminium.

8. Pare-chocs selon la revendication 7,
**caractérisé en ce que**
la traverse (1) et l'élément frontal (2) forment la partie arrière et la partie avant d'un profilé creux extrudé.

9. Pare-chocs selon la revendication 7,
**caractérisé en ce que**
le profilé creux est plié et fraisé ou découpé, de sorte que la section transversale du système de protection des piétons formé par la traverse et l'élément frontal reste sensiblement constante, au moins dans la partie médiane.

10. Pare-chocs selon l'une des revendications précédentes,
**caractérisé en ce que**
l'élément frontal (2) présente des fentes (4) s'étendant verticalement.

11. Pare-chocs selon la revendication 9,
**caractérisé en ce que**
les fentes (4) s'étendent de la zone de paroi arrière supérieure (3a) jusqu'à la zone de paroi arrière inférieure (3b) de l'élément frontal.

12. Pare-chocs selon la revendication 11,
**caractérisé en ce que**
les fentes (4), avant que les zones de paroi arrière supérieure et inférieure (3a, 3b) ne touchent la traverse (1), se terminent à une distance de plusieurs millimètres.

13. Pare-chocs selon l'une des revendications 10 à 12,
**caractérisé en ce que**
les fentes (4) ont une largeur de l'ordre de 1 à plusieurs millimètres.

14. Pare-chocs selon l'une des revendications 10 à 13,
**caractérisé en ce que**
les fentes (4) sont équidistantes et réparties sur toute la longueur de l'élément frontal (2).

15. Pare-chocs selon l'une des revendications précédentes,
**caractérisé en ce que**
l'élément frontal (2) présente dans sa zone de paroi frontale (5) un creux (6) en retrait vers l'arrière, qui s'étend sur toute sa longueur.

16. Pare-chocs selon l'une des revendications précédentes,
**caractérisé en ce que**
l'élément frontal (2) présente sur le côté intérieur de ses parois un profil strié (7) en direction de l'axe longitudinal de l'élément frontal.

17. Pare-chocs selon la revendication 16,
**caractérisé en ce que**
l'élément frontal (2) présente dans les creux des stries (7) une épaisseur de paroi d'environ 1 mm et sur les crêtes des striés une épaisseur de paroi d'environ 1,4 mm.

18. Pare-chocs selon l'une des revendications précédentes,
**caractérisé en ce que**
des capteurs de déformation et/ou d'accélération et/ou des capteurs de distance sont posés sur les parois intérieures de l'élément frontal (2).

19. Pare-chocs selon l'une des revendications précédentes,
**caractérisé en ce que**
l'élément frontal (2), en coupe transversale, présente en tout endroit un rayon de courbure le plus grand possible.
